# EUROPEAN PATENT APPLICATION

(11) **EP 4 550 853 A1**
(43) Date of publication of application: **07.05.2025**
(21) Application number: 23851773.4
(22) Date of filing: 07.08.2023
(51) Int. Cl.: H04W 4/021

(54) **COMMUNICATION METHOD AND APPARATUS, AND STORAGE MEDIUM**

(30) Priority: 10.08.2022 CN 202210957727
(71) Applicant: Huawei Technologies Co., Ltd., Shenzhen, Guangdong 518129 (CN)
(72) Inventor: ZHANG, Chi, Shenzhen, Guangdong 518129 (CN); ZHU, Qianghua, Shenzhen, Guangdong 518129 (CN); LI, Wenzheng, Shenzhen, Guangdong 518129 (CN); YAN, Yali, Shenzhen, Guangdong 518129 (CN)
(74) Representative: Goddar, Heinz J.
(86) International application number: PCT/CN2023/111490
(87) International publication number: WO 2024/032552

(57) **Abstract**

This application discloses a communication method and apparatus, and a storage medium. A UE may send, to an AMF, an indication that the UE supports an enhanced LADN, or the AMF may obtain group subscription data from a UDM, so that the AMF can learn that the UE supports the enhanced LADN, and a group service area configured for the UE is at a DNN and S-NSSAI granularity. In this way, the AMF can perceive that an LADN processing capability of the UE is enhanced, and send a correct group service area to the UE.

## Description

This application claims priority to Chinese Patent Application No. 202210957727.3, filed with the China National Intellectual Property Administration on August 10, 2022 and entitled "COMMUNICATION METHOD AND APPARATUS, AND STORAGE MEDIUM", which is incorporated herein by reference in its entirety.

### TECHNICAL FIELD

This application relates to the field of communication technologies, and in particular, to a communication method and apparatus, and a storage medium.

### BACKGROUND

A currently defined local area data network (local area data network, LADN) mechanism is implemented at a data network (data network, DN) granularity, and a terminal subscribes to only a single 5th generation (5th generation, 5G) mobile communication network virtual network (virtual network, VN) group of each data network name (data network name, DNN).

A terminal with an enhanced capability may be a member in a plurality of 5G VN groups having a same DNN and different single network slice selection assistance information (single network slice selection assistance information, S-NSSAI). That is, the terminal has a capability of processing allocation of each DNN and/or S-NSSAI LADN area. However, a network side does not perceive that an LADN processing capability of the terminal is enhanced.

Therefore, how to enable the network side to perceive enhancement of the LADN processing capability of the terminal and enable the network side to configure a correct LADN area for the terminal is a problem that urgently needs to be resolved currently.

### SUMMARY

This application provides a communication method and apparatus, and a storage medium, to enable a network side to perceive enhancement of an LADN processing capability of a terminal and enable the network side to configure a correct LADN area for the terminal.

According to a first aspect, a communication method is provided. The method includes: sending a first indication to a mobility management network element, where the first indication indicates that a terminal supports an enhanced LADN; receiving an available group service area from the mobility management network element, where the group service area is at a DNN and S-NSSAI granularity; and performing communication in the available group service area based on the information about the available group service area.

In this aspect, the terminal may send, to the mobility management network element, an indication that the terminal supports the enhanced LADN, so that the mobility management network element can learn that the terminal supports the enhanced LADN, and a group service area configured for the terminal is at the DNN and S-NSSAI granularity. In this way, the mobility management network element can perceive that an LADN processing capability of the terminal is enhanced, and send a correct group service area to the terminal.

In a possible implementation, the first indication is included in a registration request, registration update, tracking area update, service request, or terminal configuration update procedure.

In this implementation, the mobility management network element may perceive, by using the registration request, registration update, tracking area update, service request, or terminal configuration update procedure, that the terminal supports the enhanced LADN.

According to a second aspect, a communication method is provided. The method includes: obtaining a first indication, where the first indication indicates that a terminal supports an enhanced LADN; obtaining group subscription data, where the group subscription data includes at least one of the following information: a DNN, S-NSSAI, and a group service area, where the group service area is at a DNN and S-NSSAI granularity; determining an available group service area based on the group subscription data and a registration area of the terminal; and sending the information about the available group service area.

In this aspect, the mobility management network element may learn, by obtaining an indication indicating that the terminal supports the enhanced LADN, that the terminal supports the enhanced LADN, so that a group service area configured for the terminal is at the DNN and S-NSSAI granularity. In this way, the mobility management network element can perceive that an LADN processing capability of the terminal is enhanced, and send a correct group service area to the terminal.

In a possible implementation, the first indication is carried in a registration request, registration update, tracking area update, service request, or terminal configuration update procedure of the terminal or a group subscription data subscription response of a unified data management network element. The group subscription data is carried in the group subscription data subscription response.

In this implementation, the mobility management network element may perceive, by using the registration request, registration update, tracking area update, service request, or terminal configuration update procedure, that the terminal supports the enhanced LADN.

According to a third aspect, a communication method is provided. The method includes: receiving a group subscription data subscription request from a mobility management network element; sending a group subscription data subscription response to the mobility management network element, where the group subscription data subscription response includes group subscription data, and the group subscription data includes at least one of the following information: a DNN, S-NSSAI, a first indication, and a group service area, where the group service area is at a DNN and S-NSSAI granularity, and the first indication indicates that a terminal supports an enhanced LADN.

In this aspect, a unified data management network element stores the first indication that the terminal supports the enhanced LADN, to send the group subscription data to the mobility management network element when the mobility management network element obtains the group subscription data, where the group subscription data includes the first indication, so that the mobility management network element can learn that the terminal supports the enhanced LADN, and a group service area configured for the terminal is at the DNN and S-NSSAI granularity. In this way, the mobility management network element can perceive that an LADN processing capability of the terminal is enhanced, and send a correct group service area to the terminal.

In a possible implementation, the method further includes: receiving a group subscription data create or update request from a capability exposure network element, where the group subscription data create or update request is used to request to create or update the group subscription data, and the group subscription data create or update request includes the group subscription data; and storing created or updated group subscription data.

In this implementation, the unified management network element may update the group subscription data by using the group subscription data create or update request of the capability exposure network element.

According to a fourth aspect, a communication method is provided. The method includes: sending group data to a capability exposure network element, where the group data includes a group service area and a first indication, the first indication indicates that a terminal supports an enhanced LADN, and the group service area is at a DNN and S-NSSAI granularity.

In this aspect, an application function network element may perceive that the terminal supports the enhanced LADN, to send the group data to the capability exposure network element, so that a mobility management network element can learn that the terminal supports the enhanced LADN, and a group service area configured for the terminal is at the DNN and S-NSSAI granularity. In this way, the mobility management network element can perceive that an LADN processing capability of the terminal is enhanced, and send a correct group service area to the terminal.

According to a fifth aspect, a communication method is provided. The method includes: receiving group data from an application function network element, where the group data includes a group service area and a first indication, the group service area is at a DNN and S-NSSAI granularity, and the first indication indicates that a terminal supports an enhanced LADN; and sending a group subscription data create or update request to a unified data management network element or a unified data repository, where the group subscription data create or update request is used to request to create or update group subscription data, the group subscription data create or update request includes the group subscription data, and the group subscription data includes at least one of the following information: a DNN, S-NSSAI, the first indication, and the group service area.

In this implementation, the capability exposure network element receives the group data from the application function network element, and enables the unified data management network element to update the group subscription data by using the group subscription data create or update request, so that the mobility management network element can learn that the terminal supports the enhanced LADN, and a group service area configured for the terminal is at the DNN and S-NSSAI granularity. In this way, the mobility management network element can perceive that an LADN processing capability of the terminal is enhanced, and send a correct group service area to the terminal.

According to a sixth aspect, a communication apparatus is provided. The communication apparatus may implement the method in the first aspect. For example, the communication apparatus may be a terminal or a chip system of the terminal. The foregoing method may be implemented by using software, hardware, or by executing corresponding software by hardware.

In a possible implementation, the apparatus includes a transceiver unit and a processing unit. The transceiver unit is configured to: send a first indication to a mobility management network element, where the first indication indicates that a terminal supports an enhanced local area data network LADN; and receive information about an available group service area from the mobility management network element, where the group service area is at a data network name DNN and single network slice selection assistance information S-NSSAI granularity. The transceiver unit is further configured to perform communication in the available group service area based on the information about the available group service area.

Optionally, the first indication is included in a registration request, registration update, tracking area update, service request, or terminal configuration update procedure.

According to a seventh aspect, a communication apparatus is provided. The communication apparatus may implement the method in the second aspect. For example, the communication apparatus may be a mobility management network element or a chip system in the mobility management network element. The foregoing method may be implemented by using software, hardware, or by executing corresponding software by hardware.

In a possible implementation, the apparatus includes a transceiver unit and a processing unit. The processing unit is configured to obtain a first indication, where the first indication indicates that a terminal supports an enhanced LADN. The processing unit is further configured to obtain group subscription data, where the group subscription data includes at least one of the following information: a DNN, S-NSSAI, and a group service area, where the group service area is at a DNN and S-NSSAI granularity. The processing unit is further configured to determine an available group service area based on the group subscription data and a registration area of the terminal. The transceiver unit is configured to send the information about the available group service area.

Optionally, the first indication is carried in a registration request, registration update, tracking area update, service request, or terminal configuration update procedure of the terminal or a group subscription data subscription response of a unified data management network element. The group subscription data is carried in the group subscription data subscription response.

According to an eighth aspect, a communication apparatus is provided. The communication apparatus may implement the method in the third aspect. For example, the communication apparatus may be a unified data management network element or a chip system in the unified data management network element. The foregoing method may be implemented by using software, hardware, or by executing corresponding software by hardware.

In a possible implementation, the apparatus includes a transceiver unit and a processing unit. The transceiver unit is configured to receive a group subscription data subscription request from a mobility management network element. The transceiver unit is further configured to send a group subscription data subscription response to the mobility management network element, where the group subscription data subscription response includes group subscription data, and the group subscription data includes at least one of the following information: a DNN, S-NSSAI, a first indication, and a group service area, where the group service area is at a DNN and S-NSSAI granularity, and the first indication indicates that a terminal supports an enhanced LADN.

Optionally, the transceiver unit is further configured to receive a group subscription data create or update request from a capability exposure network element, where the group subscription data create or update request is used to request to create or update the group subscription data, and the group subscription data create or update request includes the group subscription data. The processing unit is configured to store created or updated group subscription data.

According to a ninth aspect, a communication apparatus is provided. The communication apparatus may implement the method in the fourth aspect. For example, the communication apparatus may be an application function network element or a chip system in the application function network element. The foregoing method may be implemented by using software, hardware, or by executing corresponding software by hardware.

In a possible implementation, the apparatus includes a transceiver unit and a processing unit. The transceiver unit is configured to send group data to a capability exposure network element, where the group data includes a group service area and a first indication, the first indication indicates that a terminal supports an enhanced LADN, and the group service area is at a DNN and S-NSSAI granularity.

According to a tenth aspect, a communication apparatus is provided. The communication apparatus may implement the method in the fifth aspect. For example, the communication apparatus may be a unified data repository or a chip system in the unified data repository. The foregoing method may be implemented by using software, hardware, or by executing corresponding software by hardware.

In a possible implementation, the apparatus includes a transceiver unit and a processing unit. The transceiver unit is configured to receive group data from an application function network element, where the group data includes a group service area and a first indication, the group service area is at a DNN and S-NSSAI granularity, and the first indication indicates that a terminal supports an enhanced LADN. The transceiver unit is further configured to send a group subscription data create or update request to a unified data management network element or a unified data repository, where the group subscription data create or update request is used to request to create or update group subscription data, the group subscription data create or update request includes the group subscription data, and the group subscription data includes at least one of the following information: a DNN, S-NSSAI, the first indication, and the group service area.

In another possible implementation, the communication apparatus includes a processor coupled to a memory. The processor is configured to support the apparatus in performing a corresponding function in the foregoing communication method. The memory is configured to be coupled to the processor, and the memory stores a computer program (or computer-executable instructions) and/or data necessary for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

In another possible implementation, the communication apparatus includes a processor and a transceiver apparatus. The processor is coupled to the transceiver apparatus, and the processor is configured to execute a computer program or instructions to control the transceiver apparatus to receive and send information; and when the processor executes the computer program or instructions, the processor is further configured to implement the foregoing method by using a logic circuit or by executing code instructions. The transceiver apparatus may be a transceiver, a transceiver circuit, an interface circuit, or an input/output interface, and is configured to: receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatus is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine; and a receiving unit may be a receiver or a receiver machine.

According to an eleventh aspect, a communication system is provided. The communication system includes the communication apparatus according to the sixth aspect to the tenth aspect.

According to a twelfth aspect, a computer-readable storage medium is provided. The computer-readable storage medium stores a computer program or instructions. When the program or instructions are executed by a processor, the method according to any one of the first aspect to the fifth aspect is performed.

According to a thirteenth aspect, a computer program product is provided. When the computer program product is executed on a computing device, the method according to any one of the first aspect to the fifth aspect or the implementations of the first aspect to the fifth aspect is performed.

According to a fourteenth aspect, a circuit is provided. The circuit is coupled to a memory, and the circuit is configured to perform the method according to any one of the first aspect to the fifth aspect or the implementations of the first aspect to the fifth aspect. The circuit may include a chip circuit.

### BRIEF DESCRIPTION OF DRAWINGS

FIG. 1 is a diagram of a service-based interface-based non-roaming architecture of a 5^{th} generation mobile communication network according to an embodiment of this application;
FIG. 2 is a diagram of a reference point-based non-roaming architecture of a 5^{th} generation mobile communication network according to an embodiment of this application;
FIG. 3 is a schematic flowchart of supporting an AF in providing group service/LADN area information for a service group according to an embodiment of this application;
FIG. 4 is a schematic flowchart of a communication method according to an embodiment of this application;
FIG. 5 is a schematic flowchart of a communication method in a registration scenario according to an embodiment of this application;
FIG. 6 is a schematic flowchart of another communication method according to an embodiment of this application;
FIG. 7 is a further detailed schematic flowchart of the communication method shown in FIG. 6;
FIG. 8 is a diagram of a structure of a communication apparatus according to an embodiment of this application;
FIG. 9 is a diagram of a structure of a simplified terminal according to an embodiment of this application; and
FIG. 10 is a diagram of a structure of another communication apparatus according to an embodiment of this application.

### DESCRIPTION OF EMBODIMENTS

The technical solutions provided in this application may be applied to various communication systems, for example, a long term evolution (long term evolution, LTE) system, a 5^{th} generation (5^{th} generation, 5G) communication system (or referred to as an NR system), and another future communication system such as a 6^{th} generation (6^{th} generation, 6G) communication system. Optionally, the technical solutions provided in this application may be further applied to an internet of things (internet of things, IoT) system, a narrowband internet of things (narrowband internet of things, NB-IoT) system, and the like.

A communication system to which the communication method in embodiments of this application is applied includes a terminal, a mobility management network element, a unified data management network element, a unified data repository, a data network (data network, DN), and an application function entity, and may further include a policy control network element and a capability exposure network element. A network element or an entity corresponding to the mobility management network element may be an access and mobility management function (access and mobility management function, AMF) entity or the like in a 5G mobile communication system. This is not specifically limited in embodiments of this application. The foregoing devices and network elements may directly communicate with each other, or may communicate with each other through forwarding by another device or network element. This is not specifically limited in embodiments of this application. Although not shown, the communication system may further include another network element. This is not specifically limited in embodiments of this application.

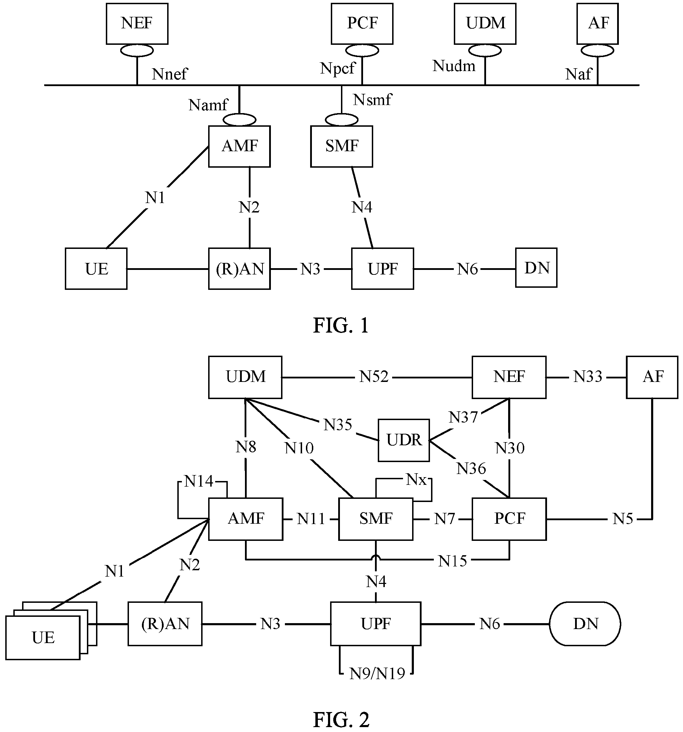

Specifically, a service-based interface-based non-roaming architecture of a 5^{th} generation mobile communication network shown in FIG. 1 and a reference point-based non-roaming architecture of a 5^{th} generation mobile communication network shown in FIG. 2 are used as examples. The communication system mainly includes an AMF entity, a user plane function (user plane function, UPF) entity, a network exposure function (network exposure function, NEF) entity, an application function (application function, AF) entity, a unified data repository (unified data repository, UDR) function entity, and a unified data management (unified data management, UDM) function entity, and may further include a policy control function (policy control function, PCF) entity and a session management function (Session Management Function, SMF) entity. It should be noted that function entities included in FIG. 1 and FIG. 2 and functions of the function entities may be the same. In FIG. 1, because it is based on a service-based interface, a message sent by one function entity to another function entity needs to carry an identifier of the another function entity. However, in FIG. 2, because it is based on a reference point, a message between function entities is an interfaced message, and an identifier of the function entity does not need to be carried.

The functions of the function entities in FIG. 1 and FIG. 2 are as follows.

The AMF entity is mainly responsible for signaling processing, for example, functions such as access control, mobility management, attach and detach, and gateway selection. When the AMF entity provides a service for a session in a terminal, the AMF entity provides a storage resource of a control plane for the session, to store a session identifier, an SMF entity identifier associated with the session identifier, and the like.

The SMF entity is mainly responsible for session management, and is specifically responsible for selecting the user plane function entity, redirecting the user plane function entity, allocating an internet protocol (internet protocol, IP) address, establishing, modifying, and releasing a bearer, and controlling quality of service (quality of service, QoS).

The UPF entity is responsible for forwarding and receiving user data in the terminal. The UPF entity may receive the user data from a data network, and transmit the user data to the terminal by using an access network device. Further, the UPF entity may receive the user data from the terminal by using the access network device, and forward the user data to the data network. In the UPF entity, a transmission resource and a scheduling function that provide a service for the terminal are managed and controlled by the SMF entity.

The NEF entity mainly supports secure interaction between a 3GPP network and a third-party application. The NEF can securely expose a network capability and an event to the third-party application, to enhance or improve quality of service of the application. The 3GPP network can also securely obtain related data from the third-party application, to enhance intelligent decision-making of the network. In addition, the function entity supports restoring structured data from the UDR or storing structured data into the UDR.

The AF entity mainly supports interaction with the 3GPP network to provide a service, for example, influencing data routing decision and a policy control function, or providing some business services for a network side (these services may or may not be provided by a 3^{rd} party (3^{rd} party)).

The PCF entity mainly supports providing a unified policy framework to control network behavior, providing a policy rule for a network function at a control layer, and is responsible for obtaining user subscription information related to policy decision-making.

The UDR entity is mainly responsible for storing structured data, and stored content includes subscription data and policy data, externally exposed structured data, and application-related data.

The UDM entity is mainly configured to manage the user subscription information.

It should be noted that the foregoing function entities are only names, and the names do not constitute a limitation on the entities. For example, the session management function entity may also be replaced with a "session management function" or another name. In addition, the session management function entity may also correspond to an entity that includes another function in addition to the session management function. The user plane function entity may also be replaced with a "user plane function" or another name. In addition, the user plane function entity may also correspond to an entity that includes another function in addition to the user plane function. This is uniformly described herein, and details are not described below again.

The terminal accesses the network by using a radio access network (radio access network, RAN) device or an access network (access network, AN) device. The RAN device is mainly a wireless network device in the 3GPP network, and the AN may be an access network device defined in non-3GPP.

Optionally, the terminal in embodiments of this application may be an access terminal, a subscriber unit, a subscriber station, a mobile station, a relay station, a remote station, a remote terminal, a mobile device, a user terminal (user terminal), a user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved public land mobile network (public land mobile network, PLMN), a terminal in a future internet of vehicles, or the like. This is not limited in embodiments of this application.

The access network device in embodiments of this application may be a device that can communicate with the terminal. The access network device may be any device having a wireless transceiver function. The access network device includes but is not limited to a base station such as a NodeB (NodeB), an evolved base station such as an evolved NodeB (eNodeB), a base station in a 5^{th} generation (the 5^{th} generation, 5G) communication system, a base station or an access network device in a future communication system, and an access node, a wireless relay node, a wireless backhaul node in a Wi-Fi system, and the like. The access network device may alternatively be a radio controller in a cloud radio access network (cloud radio access network, CRAN) scenario. The access network device may alternatively be a small cell, a transmission node (transmission reference point, TRP), or the like. A specific technology and a specific device form used by the access network device are not limited in embodiments of this application.

The access network device may alternatively be an access node, a wireless relay node, a wireless backhaul node, or the like in a wireless local area network (wireless fidelity, Wi-Fi) system. The access network device may alternatively be a radio controller in a cloud radio access network (cloud radio access network, CRAN) scenario.

For ease of description, the following uses a base station as an example to describe the access network device and the like in this application. In some deployments of the base station, the base station may include a central unit (central unit, CU), a distributed unit (distributed unit, DU), and the like. In some other deployments of the base station, the CU may be further divided into a CU-control plane (control plane, CP), a CU-user plane (user plane, UP), and the like. In some other deployments of the base station, the base station may alternatively be an open radio access network (open radio access network, ORAN) architecture or the like. A specific deployment manner of the base station is not limited in this application.

By way of example but not limitation, in embodiments of this application, the terminal may be a mobile phone, a tablet computer, a computer having a wireless transceiver function, a virtual reality terminal, an augmented reality terminal, a wireless terminal in industrial control, a wireless terminal in self-driving, a wireless terminal in remote surgery, a wireless terminal in a smart grid, a wireless terminal in transportation security, a wireless terminal in a smart city, a wireless terminal in a smart home, or the like.

By way of example but not limitation, in embodiments of this application, the wearable device may also be referred to as a wearable intelligent device, and is a general term of wearable devices, such as glasses, gloves, a watch, clothes, and shoes, that are developed by intelligently designing daily wear by using a wearable technology. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-size devices that can implement complete or partial functions without depending on smartphones, for example, smart watches or smart glasses, and devices that focus only on a type of application function and need to work with other devices such as smartphones, for example, various smart bands or smart jewelry for monitoring physical signs.

In addition, in embodiments of this application, the terminal may alternatively be a terminal in an internet of things (internet of things, IoT) system. IoT is an important part of future information technology development, and a main technical feature of the IoT is connecting an object to a network by using a communication technology, to implement an intelligent network of human-machine interconnection and thing-thing interconnection. In embodiments of this application, the IoT technology may implement massive connections, deep coverage, and terminal power saving by using, for example, a narrowband (narrowband, NB) technology.

In addition, in embodiments of this application, the terminal may further include a sensor such as an intelligent printer, a train detector, and a gas station. Main functions of the terminal include collecting data (for some terminals), receiving control information and downlink data of the access network device, sending an electromagnetic wave, and transmitting uplink data to the access network device.

Optionally, the access network device in embodiments of this application may be any communication device that is configured to communicate with the terminal and that has a wireless transceiver function. The access network device includes but is not limited to an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a TRP, or the like. The access network device may alternatively be a gNB, a TRP, or a TP in a 5G system, or one antenna panel or a group of antenna panels (including a plurality of antenna panels) of a base station in a 5G system. In addition, the access network device may alternatively be a network node that constitutes a gNB or a TP, for example, a BBU or a distributed unit (distributed unit, DU).

In some deployments, the gNB may include a central unit (central unit, CU) and a DU. In addition, the gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Because information at the RRC layer is finally changed into information at the PHY layer, or is changed from information at the PHY layer, in this architecture, higher layer signaling such as RRC layer signaling may also be considered to be sent by the DU, or be sent by the DU and the AAU. It may be understood that the access network device may be a device including one or more of a CU node, a DU node, and an AAU node.

Optionally, the access network device and the terminal in embodiments of this application may communicate with each other by using a licensed spectrum, may communicate with each other by using an unlicensed spectrum, or may communicate with each other by using both a licensed spectrum and an unlicensed spectrum. The access network device and the terminal may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the access network device and the terminal is not limited in embodiments of this application.

Optionally, the terminal and the access network device in embodiments of this application may be deployed on land, including indoor or outdoor, handheld or in-vehicle; may be deployed on water; or may be deployed on an airplane, a balloon, or a satellite in the air. An application scenario of the terminal, the access network device, or a location management device is not limited in embodiments of this application.

Optionally, in embodiments of this application, the terminal, the AMF, the UDM, the NEF, and the AF include a hardware layer, an operating system layer that runs on the hardware layer, and an application layer that runs on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing by using a process (process), for example, a Linux operating system, a Unix operating system, an Android operating system, an iOS operating system, or a Windows operating system. The application layer includes applications such as a browser, contacts, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal, the AMF, the UDM, the NEF, or the AF, or a functional module that is in the terminal, the AMF, the UDM, the NEF, or the AF and that can invoke and execute the program.

In other words, a related function of the terminal, the AMF, the UDM, the NEF, or the AF in embodiments of this application may be implemented by one device, may be jointly implemented by a plurality of devices, or may be implemented by one or more functional modules in one device. This is not specifically limited in embodiments of this application. It may be understood that the foregoing function may be a network element in a hardware device, a software function running on dedicated hardware, a combination of hardware and software, or a virtualization function instantiated on a platform (for example, a cloud platform).

For a group of UEs belonging to a 5G VN group, a group member UE may initiate, in a service area within a specific range, a service dedicated to the 5G VN group. For a specific service in a service area within a specific range, a concept of "group service area" is proposed and implementation mechanisms for a "group service area" attribute are provided. These mechanisms can meet a specific service of UEs in a group. For example:
- Service area restriction: A service area restriction mechanism is for each UE and is implemented in the AMF and the UE. A UE in a restricted area is not allowed to initiate a service request procedure, and is not allowed to have a user plane connection and the like.
- LADN: An LADN service area is applicable to any protocol data unit (protocol data unit, PDU) session of a given data network name (data network name, DNN). The LADN service area is enforced in the SMF. A UE outside the LADN service area cannot access any service of the given DNN.
- Spatial validity in impact of edge service traffic: The spatial validity is enforced in the SMF. A UE outside a spatial validity area can access a service, and an existing spatial validity mechanism already supports a "service area" of a group of UEs that use an edge service.

For implementation of a 5G VN group service area, an LADN mechanism defined in a 3^{rd} generation partnership project (3^{rd} generation partnership project, 3GPP) technical standard (technical standard, TS) 23.501 is still used. To be specific, an LADN service area of the UE is obtained by the AMF based on a local configuration or a DN subscription data configuration in the UDM and a location of the UE. For UEs that access a same LADN DNN service area, configured LADN service areas are the same regardless of other factors. Therefore, in an existing LADN mechanism, the group service area is managed at a DN granularity.

However, with enhancement of capabilities of some UEs, one UE may belong to a 5G VN group including different DNNs and/or different S-NSSAI (to be specific, a same DNN and different S-NSSAI correspond to different 5G VN groups; different DNNs and same S-NSSAI correspond to different 5G VN groups; or different DNNs and different S-NSSAI correspond to different 5G VN groups). This type of UE has a feature of supporting an enhanced local area data network (enhanced LADN), to be specific, supporting implementation of processing a group service area in an LAND DNN/LADN S-NSSAI area. If an existing LADN DNN mechanism is still used, the network side cannot perceive whether the capability of the UE is enhanced. If the processing capability of the UE is enhanced but the network side does not perceive enhancement, the AMF may send an incorrect LADN area to the UE. The UE expects to perform the LADN mechanism at a more accurate granularity, that is, in a manner of a combination of the DN granularity and an S-NSSAI granularity. This is different from a mechanism of an existing protocol.

Currently, the UE knows, based on each public land mobile network (public land mobile network, PLMN), whether the DNN is an LADN DNN and an association between an application and the LADN DNN. The LADN service area is configured in the AMF based on the DN. For different UEs that access a same LADN, configured LADN service areas are the same regardless of whether other factors (such as UE subscription information) are the same. LADN information (that is, LADN service area information) is provided by the AMF to the UE in a UE registration process or a UE configuration update process.

When the UE performs the registration process, the AMF may provide the UE with LADN information of an available LADN list in a registration area in a registration accept message based on a local configuration of the LADN, the location of the UE, and UE subscription information that is about subscribed DNNs and that is received from the UDM. The UE may provide LADN DNNs to retrieve LADN information of the indicated LADN DNNs, or provide an indication to request the LADN information to retrieve LADN information of all available LADNs in the registration area.

The UE determines, based on the LADN service area information, whether the UE is in the LADN service area. If the UE does not have the LADN service area information, the UE considers that the UE is not in the LADN service area, and cannot initiate a procedure such as establishing a PDU session in the LADN DNN area or initiating a service request for an established PDU session in the LADN area. The UE is supported in determining whether the UE is in the LADN DNN service area and the following operations are performed.
- If the UE determines that the UE is out of the LADN DNN service area, the UE cannot request to activate a user plane (user plane, UP) connection of the PDU session of the LADN DNN, cannot establish/modify the PDU session of the LADN DNN, and does not release any existing PDU session of the LADN DNN unless an explicit session management (session management, SM) PDU session release request message is received from the network.
- If the UE determines that the UE is in the LADN DNN service area, the UE may request to establish/modify the PDU session of the LADN DNN, or activate a user plane connection of an existing PDU session of the LADN DNN.

The SMF may use a UE mobility analysis and a report of existing location determining by the AMF on the UE that are provided by a network data analytics function (network data analytics function, NWDAF), to determine an existence status of the UE in the LADN service area and determine how to process an LADN PDU session.
- When the SMF is informed that the UE is out (out) of the LADN service area,
   - the SMF should immediately release the PDU session,
   - deactivate the user plane connection of the PDU session while maintaining the PDU session, and ensure that a data notification is disabled.
- If the SMF is not informed that the UE moves to the LADN service area after a period of time, the SMF may release the PDU session.
- When the SMF is informed that the UE is in (in) the LADN service area,
   - the SMF should ensure that a data notification is enabled.
- When the SMF receives downlink data or a data notification from the UPF, a network-triggered service request procedure of the LADN PDU session is triggered to activate the UP connection.
- When the SMF is informed that an existence of the UE in the LADN service area is unknown,
   - the SMF should ensure that data notification is enabled.
- When the SMF receives downlink data or a data notification from the UPF, a network-triggered service request procedure of the LADN PDU session is triggered to activate the UP connection.

When the LADN information of the UE changes, the AMF updates the LADN information to the UE by using a UE configuration update or re-registration procedure.

However, a currently defined LADN mechanism is implemented at the DN granularity, and the UE subscribes only to a single 5G VN group of each DNN. In other words, the UE cannot be a member of a plurality of 5G VN groups having a same DNN and different S-NSSAI, but the UE may be a member of a plurality of 5G VN groups under the condition. If the UE is a member of a plurality of 5G VN groups having a same DNN and different S-NSSAI, determining whether the UE is in an LADN area corresponding to the VN group needs to be completely implemented by the AMF.

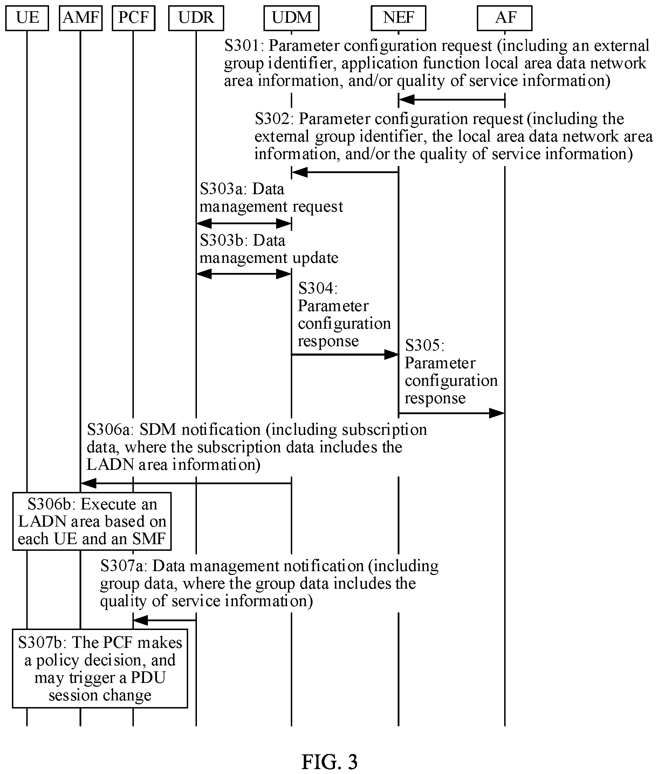

FIG. 3 is a schematic flowchart of supporting an AF in providing group service/LADN area information for a service group according to an embodiment of this application. LADN area-related information is added for a 5G VN group data provisioning procedure, to enhance capabilities of some network elements. The following procedures are specifically included.

S301: An AF sends a parameter configuration request (Nnef_ParameterProvision Request) to a NEF. The parameter configuration request includes an external group identifier (External Group ID), application function local area data network area (AF LADN Area) information, and/or quality of service (quality of service, QoS) information. The AF supports updating 5G VN group data information including an AF LADN area information attribute and/or a QoS information attribute.

S302: After receiving the parameter configuration request from the AF, the NEF sends a parameter configuration request (Nudm_ParameterProvision Request) to a UDM. The parameter configuration request includes the external group ID, the LADN area information, and/or the QoS information. Specifically, the NEF converts the AF LADN area received from the AF into a tracking area information (tracking area information, TAI) list or a cell identifier list. In addition, the 5G VN group data (including the LADN area information and/or the QoS information) is provided for the UDM in a Nudm_ParameterProvision service.

S303a: The UDM sends a data management request (Nudr_DM_Query) to a UDR.

S303b: The UDM sends a data management update (Nudr_DM_Update) to the UDR.

Specifically, the UDM interacts with the UDR based on an NEF request, and manages the 5G VN group data, including the LADN area information and/or the QoS information.

S304: The UDM sends a parameter configuration response (Nudm_ParameterProvision Response) to the NEF.

S305: The NEF sends a parameter configuration response (Nnef_ParameterProvision Response) to the AF.

S306a: The UDM sends an SDM notification (Namf_SDM_Notify) to the AMF. The SDM notification includes subscription data (subscription data), and the subscription data includes the LADN area information.

In other words, the UDM may further provide the LADN area information for the AMF based on a UDM service. An LADN area stored in the UDM is an enhanced LADN area, that is, is at a DNN and S-NSSAI granularity.

S306b: The AMF receives the LADN area information from the UDM, and executes an LADN mechanism on each UE (group member) and the SMF based on the LADN area. If an LADN is enhanced as supporting each DNN and/or S-NSSAI LADN area, the UE may process allocation of each DNN and/or S-NSSAI LADN area.

S307a: The UDR sends a data management notification (Nudr_DM_Notify) to a PCF. The data management notification includes the group data, and the group data includes the QoS information.

S307b: The PCF makes a policy decision, and may trigger a PDU session change.

The AF may send the LADN area to a network side as the 5G VN group data. The LADN is enhanced to the DNN and/or the S-NSSAI LADN area, and multi-granularity implementation of the LADN area is supported.

It can be learned that, in a procedure of supporting a group service area feature, by enhancing a capability exposure interface, the AF may use the LADN area as the 5G VN group data information, send, via the NEF, the LADN area to the UDM as the subscription data for storing, and provide the LADN area to the AMF. The AMF is no longer based on a local configuration of the LADN in the AMF, but converts group subscription data provided by the UDM and including a DNN, S-NSSAI, a group service area, and the like into a service area of each group member UE, and configures a group service area for the UE by using a registration procedure or a UE configuration update procedure.

Implementation of the group service area is similar to the LADN mechanism defined above. The UE is supported in performing the following operations.
- When the UE is not in the group service area, the UE:
   - cannot request to activate a user plane connection of a PDU session of a corresponding DNN and corresponding S-NSSAI;
   - cannot establish/modify a PDU session for the corresponding DNN and the corresponding S-NSSAI (a data notification of an established PDU session is closed, unless a report is changed); and
   - has no need to release any existing PDU session of the corresponding DNN and the corresponding S-NSSAI unless the UE receives an explicit SM PDU session release request message from a network.
- When the UE is in the group service area, the UE:
   - may request to establish/modify a PDU session of a corresponding DNN and corresponding S-NSSAI; and
   - may request to activate a user plane connection of an existing PDU session of the corresponding DNN and the corresponding S-NSSAI.

When the SMF receives a session management request of a DNN and S-NSSAI associated with a group, the SMF determines an existence status of the UE in the group service area based on an indication received from the AMF, and determines how to process a PDU session of the DNN and the S-NSSAI associated with the group (for example, immediately release the PDU session, or deactivate a user plane connection of the PDU session and maintain the PDU session).

However, although the embodiment shown in FIG. 3 describes enhancement of a capability of the UE, and the UE with the enhanced capability has a capability of processing the allocation of each DNN and/or S-NSSAI LADN area, the network side is not provided with a manner to perceive that an LADN processing capability of the UE is enhanced. In addition, for implementation of the group service area, the UE is supported in determining whether the UE is in the corresponding DNN area and the corresponding S-NSSAI area of the 5G VN group, and initiating a session establishment request, or activating a user plane connection of an established session in the area, but the LADN mechanism is not enhanced to support execution at the LADN DNN granularity and/or the S-NSSAI granularity. A granularity (the DNN and the S-NSSAI) of the LADN processing capability of the UE is different from a granularity (the DNN) executed in the LADN mechanism.

In view of this, embodiments of this application further provide a communication solution. The UE may send, to the AMF, an indication that the UE supports an enhanced LADN, or the AMF may obtain the group subscription data from the UDM, so that the AMF can learn that the UE supports the enhanced LADN, and the group service area configured for the UE is at the DNN and S-NSSAI granularity. In this way, the AMF can perceive that the LADN processing capability of the UE is enhanced, and send a correct group service area to the UE.

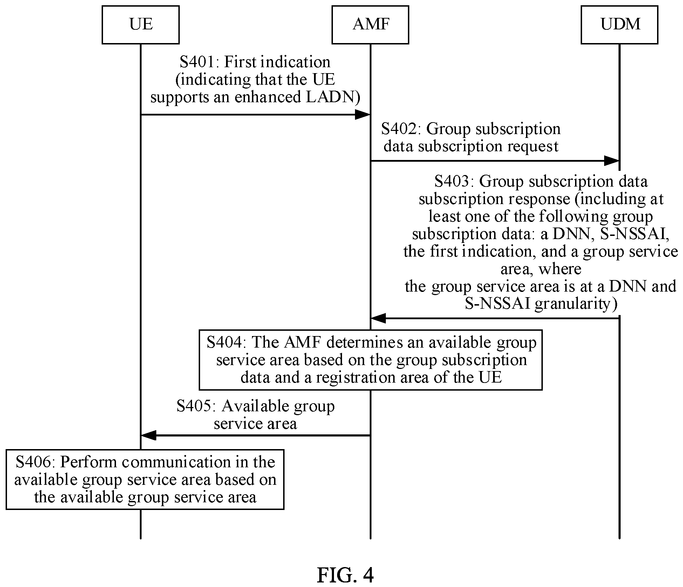

FIG. 4 is a schematic flowchart of a communication method according to an embodiment of this application. For example, the method may include the following steps.

S401: A UE sends a first indication to an AMF.

In this embodiment, a capability of the UE is enhanced, and the UE with the enhanced capability has a capability of processing allocation of each DNN and/or S-NSSAI LADN area. Therefore, the UE sends the first indication to the AMF. The first indication indicates that the UE supports an enhanced LADN.

For example, the first indication may be one bit. If a value of the one bit is "1", it indicates that the UE supports the enhanced LADN; or if a value of the one bit is "0", it indicates that the UE does not support the enhanced LADN. Alternatively, if a value of the one bit is "0", it indicates that the UE supports the enhanced LADN; or if a value of the one bit is "1", it indicates that the UE does not support the enhanced LADN.

The first indication may be carried in a newly defined message, or may be carried in an existing message. For example, the first indication may be carried in a registration request (Registration Request), registration update, tracking area update, service request, or terminal configuration update procedure sent by the UE.

S402: The AMF sends a group subscription data subscription request to a UDM.

If the first indication sent by the UE already indicates that the UE has a capability of processing the enhanced LADN, the AMF obtains group subscription data of the UE from the UDM. For example, the AMF sends the group subscription data subscription request to the UDM. The group subscription data subscription request is used to request to obtain the group subscription data of the UE.

S403: The UDM sends a group subscription data subscription response to the AMF.

The UDM stores the group subscription data of the UE, and the group subscription data includes the first indication, indicating that the UE supports the enhanced LADN.

After receiving the group subscription data subscription request sent by the AMF, the UDM sends the group subscription data subscription response to the AMF.

The group subscription data subscription response includes at least one of the following group subscription data: a DNN, S-NSSAI, the first indication, and a group service area. The group service area is at a DNN and S-NSSAI granularity.

S404: The AMF determines an available group service area based on the group subscription data and a registration area of the UE.

After receiving the group subscription data, the AMF determines that the UE supports the enhanced LADN. Because the group subscription data includes a series of UEs that support the enhanced LADN in the group service area, the AMF determines the available group service area based on the registration area of the UE, and obtains the available group service area through processing.

For example, the AMF converts, by using a registration area of a registered UE group member, a group service area and enhanced LADN information that are received in the group subscription data into a group service area (including a TAI list or a cell identifier list) available to each UE group member, and configures a group service area for the UE by using a registration or UE configuration update procedure.

S405: The AMF sends the information about the available group service area to the UE.

S406: The UE performs communication in the available group service area based on the information about available group service area.

The UE may determine, based on an LADN area (for example, LADN DNNs or LADN S-NSSAI) configured by the AMF in the UE, whether the UE is in an LADN service area, and determines whether to initiate a PDU session request of an LADN or a service request of an established LADN PDU session in the LADN area. For a specific mechanism and operation, refer to the foregoing descriptions. However, the LADN area is changed into an enhanced LADN area, that is, the LADN DNNs and the LADN S-NSSAI are supported.

According to the communication method provided in this embodiment of this application, the UE may send, to the AMF, an indication that the UE supports the enhanced LADN, so that the AMF can learn that the UE supports the enhanced LADN, and the group service area configured for the UE is at the DNN and S-NSSAI granularity. In this way, the AMF can perceive that an LADN processing capability of the UE is enhanced, and send a correct group service area to the UE.

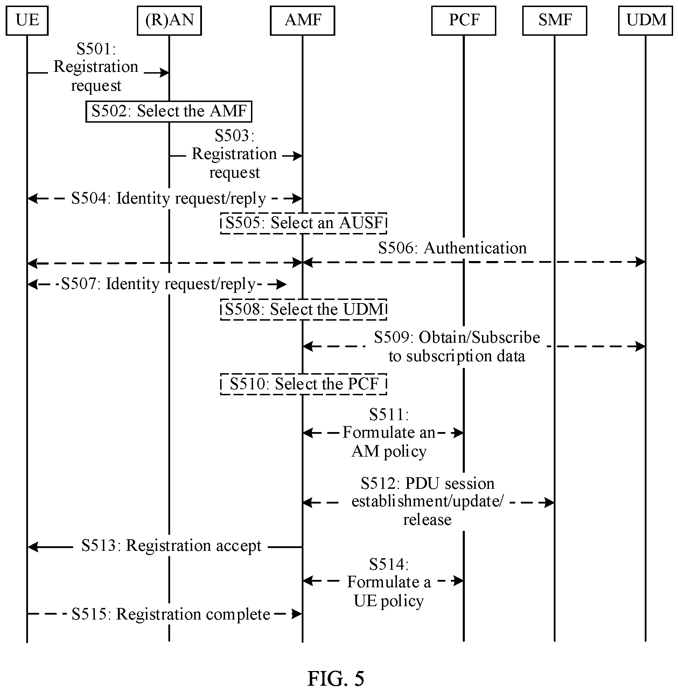

FIG. 5 is a schematic flowchart of a communication method in a registration scenario according to an embodiment of this application. For example, the method may include the following steps.

S501: A UE sends a registration request (Registration Request) to a (radio) access network ((radio) access network, (R)AN). For example, the registration request is carried in an access network message (AN message). The access network message includes an access network parameter (AN parameter) and the registration request. The registration request carries a first indication, and the first indication indicates that the UE supports an enhanced LADN (Support of enhanced LADN) or indicates to an AMF that the UE has a capability of processing the enhanced LADN. The registration request may further include information such as requested network slice selection assistance information (Requested NSSAI) and an LADN DNN.

S502: The (R)AN determines to discover and select the AMF. The (R)AN selects an AMF to serve the UE.

If the access network message does not include a 5G-system-temporary mobile subscription identifier (5G-S-temporary mobile subscription identifier, 5G-S-TMSI) or a globally unique AMF identifier (globally unique AMF identifier, GUAMI), or the 5G-S-TMSI or the GUAMI does not indicate a valid AMF, the (R)AN selects the AMF based on a (radio) access technology ((radio) access technology, (R)AT) and the requested NSSAI (if available).

S503: The (R)AN forwards the registration request to the AMF.

For example, if the UE is in a connection management-connected (CM-CONNECTED) state, the (R)AN may forward the registration request to the AMF based on an N2 connection of the UE.

If the (R)AN cannot select an appropriate AMF, the (R)AN forwards the registration request to a configured AMF in the (R)AN to select the AMF.

The (R)AN forwards the registration request to the selected AMF by using an N2 message (N2 message), and continues to include the first indication.

S504: The UE sends an identity request to the AMF, and the AMF sends an identity request reply to the UE.

S505: The AMF selects an authentication server function (authentication server function, AUSF) entity.

S506: The UE, the AMF, and a UDM complete authentication on the UE.

S507: The UE sends an identity request to the AMF again, and the AMF sends an identity request reply to the UE.

S508: The AMF selects the UDM.

The foregoing steps S504 to S508 are described only for integrity of a registration procedure. In this embodiment, the steps are optional steps, and are represented by dashed lines in the figure. For specific implementation, refer to a registration procedure in clause (registration procedure in clause) 4.2.2.2 in TS 23.502.

S509: The AMF obtains/subscribes to subscription data from the UDM.

If the first indication carried in NAS information sent by the UE already indicates that the UE has the capability of processing the enhanced LADN, the AMF obtains subscription information of group data from the UDM. The subscription information includes DNNs, S-NSSAI, and a group service area, and may further include the first indication.

S510: The AMF determines to perform PCF discovery and selection. The AMF selects a PCF to serve the UE, and establishes a UE policy association and an access and mobility management policy association.

S511: The AMF and the PCF formulate an access and mobility management (access management, AM) policy.

S512: The AMF sends a PDU session establishment/update/release request to an SMF associated with a PDU session, activates a user plane connection of the PDU session, and the like.

The foregoing steps S510 to S512 are described only for the integrity of the registration procedure. In this embodiment, the steps are optional steps, and are represented by dashed lines in the figure. For specific implementation, refer to the registration procedure in clause 4.2.2.2 in TS 23.502.

S513: The AMF sends a registration accept (Registration Accept) message to the UE.

In the registration accept message, the AMF converts the group service area into an available group service area (for example, LADN DNNs or LADN S-NSSAI) based on the subscription data provided by the UDM and a local configuration about the LADN, and sends the information about the available group service area to the UE.

S514: The AMF and the PCF formulate a UE policy. This step is an optional step in this embodiment, and is represented by a dashed line in the figure.

S515: The UE sends a registration complete message to the AMF. This step is an optional step, and is represented by a dashed line in the figure.

After the registration procedure is completed, the UE may determine, based on an LADN area (for example, the LADN DNNs or the LADN S-NSSAI) configured by the AMF in the UE, whether the UE is in an LADN service area, and determines whether to initiate a PDU session request of the LADN or a service request of an established LADN PDU session in the LADN area. For a specific mechanism and operation, refer to the foregoing descriptions. However, the LADN area is changed into an enhanced LADN area, that is, the LADN DNNs and the LADN S-NSSAI are supported.

In this embodiment, in a registration request procedure of the UE, the first indication indicating the capability of the UE of supporting the enhanced LADN is reported, so that a network side can perceive that the UE has the capability of processing the enhanced LADN. In addition, an LADN mechanism is enhanced, and allocation of the LADN area, namely, the group service area, at the DN/S-NSSAI granularity is supported. Based on the first indication, the AMF includes an LADN area (including the LADN DNNs and/or the LADN S-NSSAI) in an available range in the registration accept message, and sends the LADN area to the UE.

In this embodiment, the UE is supported in reporting UE capability enhancement by using the NAS information. In addition, the LADN mechanism is enhanced. In addition to an original LADN DNN, the LADN S-NSSAI is supported, and the UE is supported in obtaining the group service area at a more accurate granularity.

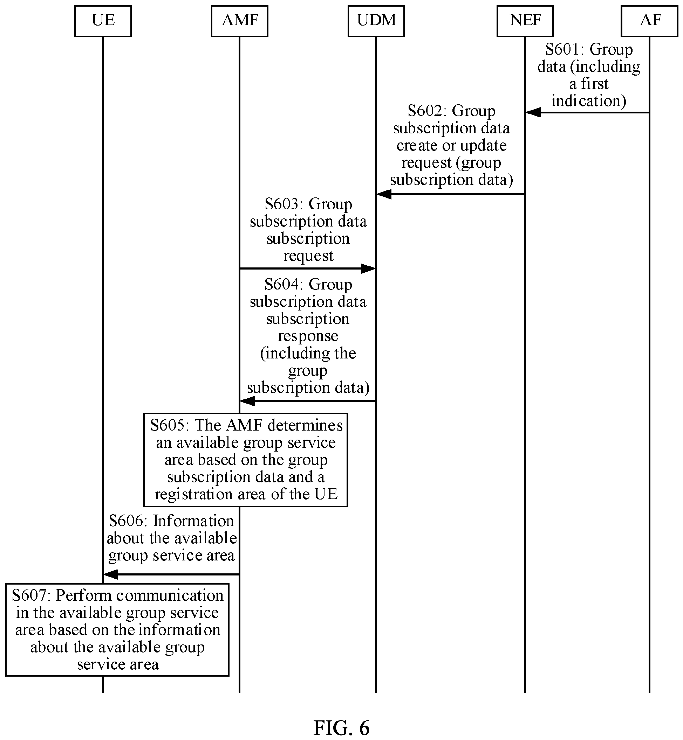

FIG. 6 is a schematic flowchart of another communication method according to an embodiment of this application. For example, the method may include the following steps.

S601: An AF sends group data to a NEF.

If the AF perceives that a UE supports an enhanced LADN, the AF sends the group data to the NEF.

The group data includes a group service area and a first indication. The first indication indicates that the UE supports the enhanced LADN. The group service area is at a DNN and S-NSSAI granularity.

In addition, the AF may further send a group identifier (Group ID) to the NEF, corresponding to a DNN, S-NSSAI, a group membership, and the like of a 5G VN group.

S602: After receiving the group data, the NEF sends a group subscription data create or update request to a UDM.

Correspondingly, the UDM receives the group subscription data create or update request.

The group subscription data create or update request is used to request to create or update group subscription data. The group subscription data create or update request includes the group subscription data. The group subscription data includes at least one of the following information: the DNN, the S-NSSAI, the first indication, and the group service area.

S603: An AMF sends a group subscription data subscription request to the UDM.

After the UE registers with the AMF, the AMF obtains the group subscription data of the UE from the UDM. For example, the AMF sends the group subscription data subscription request to the UDM. The group subscription data subscription request is used to request to obtain the group subscription data of the UE.

S604: The UDM sends a group subscription data subscription response to the AMF.

The group subscription data subscription response includes the group subscription data.

For example, the UDM provides the group subscription data for the AMF in a data type of "subscription data, group data".

S605: The AMF determines an available group service area based on the group subscription data and a registration area of the UE.

The AMF converts, by using a registration area of a registered UE group member, a group service area and enhanced LADN information that are received in the group subscription data into a group service area (including the DNN, the S-NSSAI, a TAI list, or a cell identifier list) available to each UE group member, and configures a group service area for the UE by using a registration or UE configuration update procedure.

S606: The AMF sends information about the available group service area to the UE.

S607: The UE performs communication in the available group service area based on the information about available group service area.

The UE may determine, based on an LADN area (for example, LADN DNNs or LADN S-NSSAI) configured by the AMF in the UE, whether the UE is in an LADN service area, and determines whether to initiate a PDU session request of an LADN or a service request of an established LADN PDU session in the LADN area. For a specific mechanism and operation, refer to the foregoing descriptions. However, the LADN area is changed into an enhanced LADN area, that is, the LADN DNNs and the LADN S-NSSAI are supported.

According to the communication method provided in this embodiment of this application, the AMF may obtain the group subscription data from the UDM, so that the AMF can learn that the UE supports the enhanced LADN, and the group service area configured for the UE is at the DNN and S-NSSAI granularity. In this way, the AMF can perceive that an LADN processing capability of the UE is enhanced, and send a correct group service area to the UE.

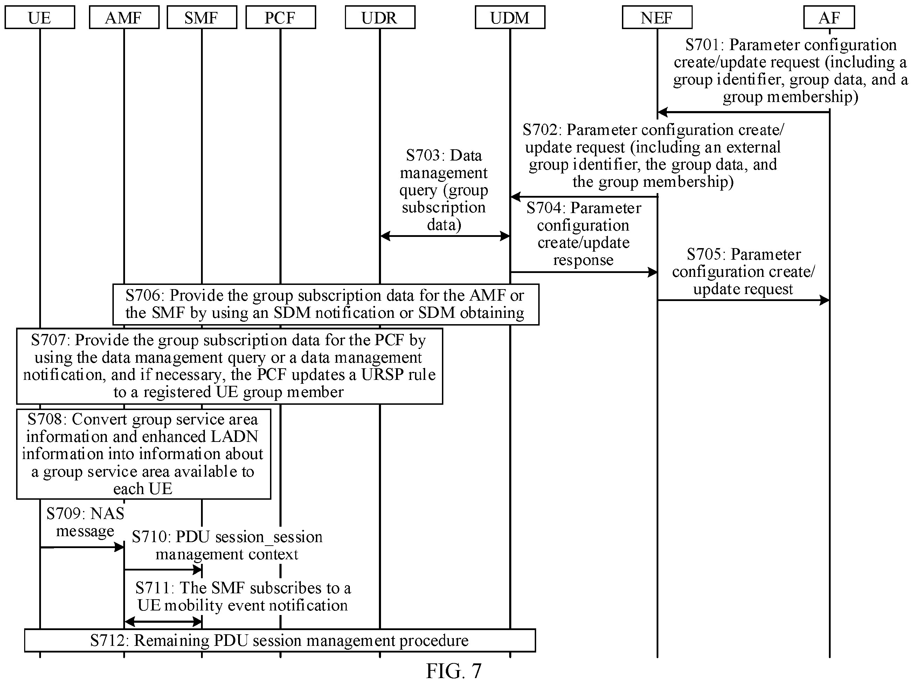

FIG. 7 is a further detailed schematic flowchart of the communication method shown in FIG. 6. For example, the method may include the following steps.

S701: An AF sends a parameter configuration creation/update request to a NEF.

For example, the AF provides, in parameter configuration creation (Nnef_ParameterProvision_Create) or a parameter configuration update (Nnef_ParameterProvision_Update), information about a to-be-created or updated service group: a group identifier (Group ID), group data, and a group membership (group membership).

The group identifier identifies a 5G VN group.

The group data includes a DNN, S-NSSAI, a group service area, and a first indication corresponding to a 5G VN group, namely, enhanced LADN information (for example, a list of UE identifiers (list of UE IDs)). The UE ID is usually a UE identifier: a generic public subscription identifier (generic public subscription identifier, GPSI).

The group membership includes a list of UE identifiers that uniquely identify a group member.

S702: The NEF requests to create or update group subscription data by using parameter configuration creation (Nudm_ParameterProvision_Create) or a parameter configuration update (Nudm_ParameterProvision_Update).

The group subscription data includes at least one of the following: an external group identifier (External Group ID), the group data, and the group membership.

The NEF may convert service area information represented by using a geographical area into service area information represented by using a TAI list or a cell identifier (cell ID) list, and include the enhanced LADN information, that is, a list of UE IDs supporting an enhanced LADN.

S703: A UDM may read corresponding group subscription data from a UDR by using a data management query (Nudr_DM_Query), so that the UDM stores 5G VN group data based on a DNN and/or S-NSSAI (5G VN group data for the DNN and/or S-NSSAI).

S704: The UDM sends a parameter configuration creation/update response (Nudm_ParameterProvision_Create/Update Response) to the NEF.

S705: The NEF sends a parameter configuration creation/update response (Naf_ParameterProvision_Create/Update Response) to the AF.

S706: The UDM provides the group subscription data (Group subscription data) for an AMF or an SMF in a data type of "subscription data, group data" by using an SDM notification or SDM obtaining (Nudm_SDM_Notification or Nudm_SDM_Get). The group subscription data carries the enhanced LADN information, to indicate to the AMF that the UE has a capability of processing the enhanced LADN. In addition, the provided group subscription data further includes the DNN, the S-NSSAI, and the group service area (an LADN DNN and/or S-NSSAI).

For example, when there is a UE group member that has performed registration via the AMF, the UDM may provide the group subscription data for the AMF by using Nudm_SDM_Notification. When a group member UE performs registration via the AMF, the UDM may provide the group subscription data for the AMF by using Nudm_SDM_Get Response.

When there is an ongoing PDU session accessing an established group via the SMF, the UDM may provide the group subscription data for the SMF by using Nudm_SDM_Notification. When a 1^{st} PDU session of an established group is accessed via the SMF, the UDM may provide the group subscription data for the SMF by using Nudm_SDM_Get Response.

S707: The UDR provides the group subscription data for a PCF in the data type of "subscription data, group data" by using the data management query (Nudr_DM_Query) or a data management notification (Nudr_DM_Notify). If necessary, the PCF updates a UE route selection policy (UE route selection policy, URSP) rule to the registered UE group member.

S708: The AMF converts, with reference to a registration area of the registered UE group member, the group service area and the enhanced LADN information that are received in the group subscription data into a group service area (including the TAI list and the cell identifier list) available to each UE group member, and configures a group service area for the UE by using a registration or UE configuration update procedure.

S709: The UE sends a NAS message to the AMF.

For behavior of the UE, refer to the behavior of the UE defined in the embodiment shown in FIG. 3. Determining, at a DNN granularity and/or an S-NSSAI granularity, whether to initiate a PDU session establishment request or a user plane connection activation request for an existing PDU session is supported.

S710: The AMF sends a PDU session_session management context (Nsmf_PDUSession_SMContext) to the SMF.

When the AMF receives a NAS SM request of a DNN and S-NSSAI associated with a group, the AMF determines that the UE exists in the group service area and forwards the request to the SMF.

S711: The SMF subscribes to a UE mobility event notification (mobility event notification) from the AMF.

When the SMF receives the NAS SM request of the DNN and the S-NSSAI associated with the group, the SMF determines, based on an indication received from the AMF, that the UE exists in the group service area. The SMF should also subscribe to the "UE mobility event notification" to report that the UE exists in an area of interest by providing the DNN and the S-NSSAI associated with the group for the AMF, as described in clause 5.6.11 and clause 5.3.4.4 in TS 23.501. The UE behaves according to the LADN mechanism defined previously.

S712: Perform a remaining PDU session management procedure.

The remaining session management procedure defined in clause 4.3 in TS 23.502 is completed.

In this embodiment, the AF is supported in providing the group service area for the service group, and the enhanced LADN information is carried in the group data, to indicate a list of UEs that support the enhanced LADN. A UE in the list of the UEs that support the enhanced LADN has a capability to implement allocation of an LADN area and the group service area at the DN granularity/the S-NSSAI granularity. A capability exposure interface is enhanced, information indicating that the UE supports an enhanced LADN feature is stored in the UDM via the AF/NEF in a form of group data subscription data, so that a network side perceives enhancement of an LADN processing capability.

It may be understood that, to implement functions in the foregoing embodiments, the network elements includes corresponding hardware structures and/or corresponding software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

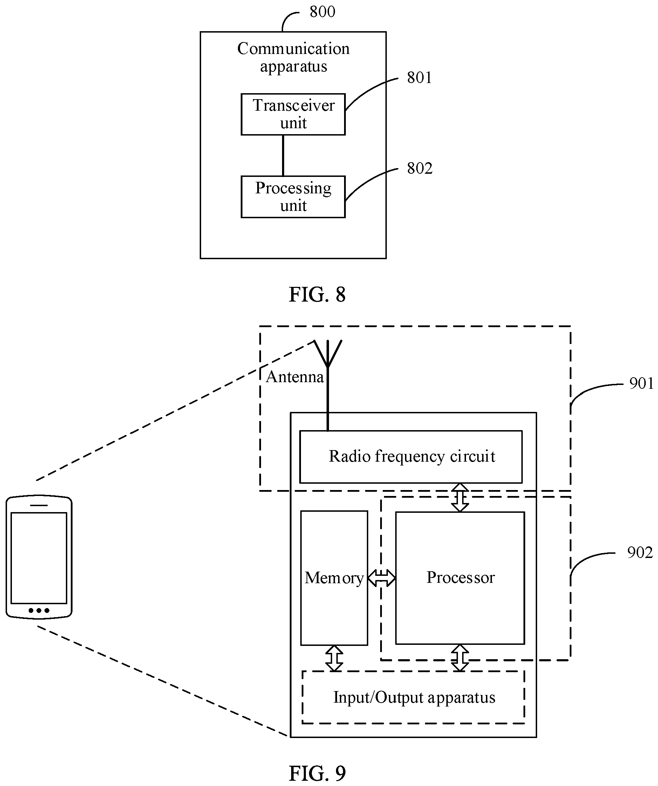

FIG. 8 to FIG. 10 are diagrams of structures of possible communication apparatuses according to embodiments of this application. These communication apparatuses may be configured to implement functions of the network elements in the foregoing method embodiments, and therefore may also implement beneficial effects of the foregoing method embodiments.

FIG. 8 is a diagram of a structure of a communication apparatus according to an embodiment of this application. The communication apparatus 800 includes a transceiver unit 801 and a processing unit 802.

When the communication apparatus is configured to implement a function of the terminal in the embodiment shown in FIG. 4, the transceiver unit 801 is configured to perform a function performed by the terminal in steps S401 and S405 in the embodiment shown in FIG. 4, and the processing unit 802 is configured to perform step S406 in the embodiment shown in FIG. 4.

When the communication apparatus is configured to implement a function of the mobility management network element in the embodiment shown in FIG. 4, the transceiver unit 801 is configured to perform a function performed by the mobility management network element in steps S401, S402, S403, and S405 in the embodiment shown in FIG. 4, and the processing unit 802 is configured to perform step S404 in the embodiment shown in FIG. 4.

When the communication apparatus is configured to implement a function of a unified data management network element in the embodiment shown in FIG. 4, the transceiver unit 801 is configured to perform a function performed by the unified data management network element in steps S402 and S403 in the embodiment shown in FIG. 4.

When the communication apparatus is configured to implement a function of the terminal in the embodiment shown in FIG. 6, the transceiver unit 801 is configured to perform a function performed by the terminal in step S606 in the embodiment shown in FIG. 6, and the processing unit 802 is configured to perform step S607 in the embodiment shown in FIG. 6.

When the communication apparatus is configured to implement a function of the mobility management network element in the embodiment shown in FIG. 6, the transceiver unit 801 is configured to perform a function performed by the mobility management network element in steps S603, S604, and S606 in the embodiment shown in FIG. 6, and the processing unit 802 is configured to perform step S605 in the embodiment shown in FIG. 6.

When the communication apparatus is configured to implement a function of the unified data management network element in the embodiment shown in FIG. 6, the transceiver unit 801 is configured to perform a function performed by the unified data management network element in steps S602 to S604 in the embodiment shown in FIG. 6.

When the communication apparatus is configured to implement a function of the capability exposure network element in the embodiment shown in FIG. 6, the transceiver unit 801 is configured to perform a function performed by the capability exposure network element in steps S601 and S602 in the embodiment shown in FIG. 6.

When the communication apparatus is configured to implement a function of the application function network element in the embodiment shown in FIG. 6, the transceiver unit 801 is configured to perform a function performed by the capability exposure network element in step S601 in the embodiment shown in FIG. 6.

FIG. 9 is a diagram of a structure of a simplified terminal. For ease of understanding and convenience of figure illustration, an example in which the terminal is a mobile phone is used in FIG. 9. As shown in FIG. 9, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user. For example, some types of terminals may not have the input/output apparatus.

When sending data, after performing baseband processing on to-be-sent data, the processor outputs a baseband signal to the radio frequency circuit. The radio frequency circuit sends a radio frequency signal to the outside in the form of an electromagnetic wave through the antenna after performing radio frequency processing on the baseband signal. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 9 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a receiving unit and a sending unit of the terminal (or may be collectively referred to as a transceiver unit), and the processor having a processing function may be considered as a processing unit of the terminal. As shown in FIG. 9, the terminal includes a transceiver unit 901 and a processing unit 902. The transceiver unit 901 may also be referred to as a receiver/transmitter (sender), a receiver/transmitter machine, a receiver/transmitter circuit, or the like. The processing unit 902 may also be referred to as a processor, a processing board, a processing module, a processing apparatus, or the like. The transceiver unit 901 is configured to implement a function of the transceiver unit 801 in the embodiment shown in FIG. 8, and the processing unit 902 is configured to implement a function of the processing unit 802 in the embodiment shown in FIG. 8.

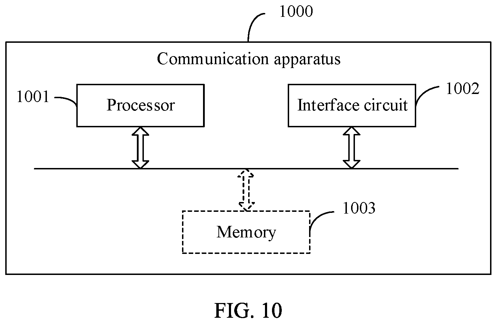

FIG. 10 is a diagram of a structure of another communication apparatus according to an embodiment of this application. The communication apparatus 1000 includes a processor 1001 and an interface circuit 1002. The processor 1001 and the interface circuit 1002 are coupled to each other. It may be understood that the interface circuit 1002 may be a transceiver or an input/output interface. Optionally, the communication apparatus 1000 may further include a memory 1003, configured to: store instructions executed by the processor 1001, store input data used by the processor 1001 to run instructions, or store data generated after the processor 1001 runs instructions.

When the communication apparatus 1000 is configured to implement the method shown in FIG. 4 or FIG. 6, the processor 1001 is configured to implement a function of the processing unit 802, and the interface circuit 1002 is configured to implement a function of the transceiver unit 801.

When the communication apparatus is a chip used in a terminal, the chip is configured to implement functions of the terminal in the foregoing method embodiments. The chip receives information from another module (such as a radio frequency module or an antenna) in the terminal. The information is sent by a network device or another device to the terminal, or the chip sends information to another module (such as a radio frequency module or an antenna) in the terminal, and the information is sent by the terminal to the network device or the another device.

When the communication apparatus is a chip used in the network device, the chip is configured to implement functions of the network device in the foregoing method embodiments. The chip receives information from another module (such as a radio frequency module or an antenna) in the network device. The information is sent by the terminal or another device to the network device, or the chip sends information to another module (such as a radio frequency module or an antenna) in the network device, and the information is sent by the network device to the terminal or the another device.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

According to a communication apparatus provided in this embodiment of this application, for a single-port communication system, a relationship between candidate antenna ports corresponding to at least one candidate values of a new antenna port field is defined, and the terminal may receive a DMRS on an antenna port determined based on the relationship. In comparison with a relationship between candidate antenna ports corresponding to at least one candidate value of an existing antenna port field, a quantity of bits needed by the antenna port field is reduced, to reduce signaling overheads of an antenna port indicating the DMRS.

The method steps in embodiments of this application may be implemented by hardware, or may be implemented by a processor executing software instructions. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. For example, a storage medium is coupled to the processor, so that the processor can read information from the storage medium and can write information into the storage medium. Certainly, the storage medium may alternatively be a component of the processor. The processor and the storage medium may be located in an ASIC. In addition, the ASIC may be located in a first node. Certainly, the processor and the storage medium may alternatively exist in the terminal as discrete components.

An embodiment of this application further provides a communication system, including the foregoing communication apparatus.

An embodiment of this application further provides a computer-readable storage medium, and the computer-readable storage medium stores a computer program or instructions. When the program or the instructions are executed by a processor, the methods in the foregoing embodiments are performed.

An embodiment of this application further provides a computer program product. When the computer program product is executed on a computing device, the methods in the foregoing embodiments are performed.

All or some of the foregoing embodiments may be implemented by software, hardware, firmware, or any combination thereof. When the software is used for implementation, all or some of embodiments may be implemented in a form of a computer program product. The computer program product includes one or more computer programs or instructions. When the computer program or the instructions are loaded and executed on a computer, all or some of the procedures or functions in embodiments of this application are performed. The computer may be a general-purpose computer, a dedicated computer, a computer network, a network device, a terminal, or another programmable apparatus. The computer program or the instructions may be stored in a computer-readable storage medium, or transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects, and indicates that three relationships may exist. For example, A and/or B may indicate the following cases: A exists alone, both A and B exist, and B exists alone, where A and B may be singular or plural. In the text descriptions of this application, the character "/" generally indicates that the associated objects are in an "or" relationship. In a formula of this application, the character "/" indicates that the associated objects are in a "division" relationship.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, wherein the method comprises:
sending a first indication to a mobility management network element, wherein the first indication indicates that a terminal supports an enhanced local area data network LADN;
receiving information about an available group service area from the mobility management network element, wherein the group service area is at a data network name DNN and single network slice selection assistance information S-NSSAI granularity; and
performing communication in the available group service area based on the information about the available group service area.

2. The method according to claim 1, wherein the first indication is comprised in a registration request, registration update, tracking area update, service request, or terminal configuration update procedure.

3. A communication method, wherein the method comprises:
obtaining a first indication, wherein the first indication indicates that a terminal supports an enhanced LADN;
obtaining group subscription data, wherein the group subscription data comprises at least one of the following information: a DNN, S-NSSAI, and a group service area, wherein the group service area is at a DNN and S-NSSAI granularity;
determining an available group service area based on the group subscription data and a registration area of the terminal; and
sending the information about the available group service area.

4. The method according to claim 3, wherein the first indication is carried in a registration request, registration update, tracking area update, service request, or terminal configuration update procedure of the terminal or a group subscription data subscription response of a unified data management network element; and
the group subscription data is carried in the group subscription data subscription response.

5. A communication method, wherein the method comprises:
receiving a group subscription data subscription request from a mobility management network element; and
sending a group subscription data subscription response to the mobility management network element, wherein the group subscription data subscription response comprises group subscription data, and the group subscription data comprises at least one of the following information: a DNN, S-NSSAI, a first indication, and a group service area, wherein the group service area is at a DNN and S-NSSAI granularity, and the first indication indicates that a terminal supports an enhanced LADN.

6. The method according to claim 5, wherein the method further comprises:
receiving a group subscription data create or update request from a capability exposure network element, wherein the group subscription data create or update request is used to request to create or update the group subscription data, and the group subscription data create or update request comprises the group subscription data; and
storing created or updated group subscription data.

7. A communication method, wherein the method comprises:
sending group data to a capability exposure network element, wherein the group data comprises a group service area and a first indication, the first indication indicates that a terminal supports an enhanced LADN, and the group service area is at a DNN and S-NSSAI granularity.

8. A communication method, wherein the method comprises:
receiving group data from an application function network element, wherein the group data comprises a group service area and a first indication, the group service area is at a DNN and S-NSSAI granularity, and the first indication indicates that a terminal supports an enhanced LADN; and
sending a group subscription data create or update request to a unified data management network element or a unified data repository, wherein the group subscription data create or update request is used to request to create or update group subscription data, the group subscription data create or update request comprises the group subscription data, and the group subscription data comprises at least one of the following information: a DNN, S-NSSAI, the first indication, and the group service area.

9. A communication apparatus, wherein the apparatus comprises:
a transceiver unit, configured to send a first indication to a mobility management network element, wherein the first indication indicates that a terminal supports an enhanced local area data network LADN, wherein
the transceiver unit is further configured to receive information about an available group service area from the mobility management network element, wherein the group service area is at a data network name DNN and single network slice selection assistance information S-NSSAI granularity; and
the transceiver unit is further configured to perform communication in the available group service area based on the available group service area.

10. The apparatus according to claim 9, wherein the first indication is comprised in a registration request, registration update, tracking area update, service request, or terminal configuration update procedure.

11. A communication apparatus, wherein the apparatus comprises:
a processing unit, configured to obtain a first indication, wherein the first indication indicates that a terminal supports an enhanced LADN, wherein
the processing unit is further configured to obtain group subscription data, wherein the group subscription data comprises at least one of the following information: a DNN, S-NSSAI, and a group service area, wherein the group service area is at a DNN and S-NSSAI granularity; and
the processing unit is further configured to determine an available group service area based on the group subscription data and a registration area of the terminal; and
a transceiver unit, configured to send the information about the available group service area.

12. The apparatus according to claim 11, wherein the first indication is carried in a registration request, registration update, tracking area update, service request, or terminal configuration update procedure of the terminal or a group subscription data subscription response of a unified data management network element; and
the group subscription data is carried in the group subscription data subscription response.

13. A communication apparatus, wherein the apparatus comprises:
a transceiver unit, configured to receive a group subscription data subscription request from a mobility management network element, wherein
the transceiver unit is further configured to send a group subscription data subscription response to the mobility management network element, wherein the group subscription data subscription response comprises group subscription data, and the group subscription data comprises at least one of the following information: a DNN, S-NSSAI, a first indication, and a group service area, wherein the group service area is at a DNN and S-NSSAI granularity, and the first indication indicates that a terminal supports an enhanced LADN.

14. The apparatus according to claim 13, wherein
the transceiver unit is further configured to receive a group subscription data create or update request from a capability exposure network element, wherein the group subscription data create or update request is used to request to create or update the group subscription data, and the group subscription data create or update request comprises the group subscription data; and
a processing unit is configured to store created or updated group subscription data.

15. A communication apparatus, wherein the apparatus comprises:
a transceiver unit, configured to send group data to a capability exposure network element, wherein the group data comprises a group service area and a first indication, the first indication indicates that a terminal supports an enhanced LADN, and the group service area is at a DNN and S-NSSAI granularity.

16. A communication apparatus, wherein the apparatus comprises:
a transceiver unit, configured to receive group data from an application function network element, wherein the group data comprises a group service area and a first indication, the group service area is at a DNN and S-NSSAI granularity, and the first indication indicates that a terminal supports an enhanced LADN, wherein
the transceiver unit is further configured to send a group subscription data create or update request to a unified data management network element or a unified data repository, wherein the group subscription data create or update request is used to request to create or update group subscription data, the group subscription data create or update request comprises the group subscription data, and the group subscription data comprises at least one of the following information: a DNN, S-NSSAI, the first indication, and the group service area.

17. A communication apparatus, comprising a processor, configured to execute a program stored in a memory, wherein when the program is executed, the apparatus is enabled to perform the method according to any one of claims 1 to 8.

18. A computer-readable storage medium, wherein the computer-readable storage medium stores a computer program, and when the computer program is executed by a processor, the method according to any one of claims 1 to 8 is implemented.
